# EUROPÄISCHE PATENTSCHRIFT

(11) **EP 3 963 357 B1**
(45) Veröffentlichungstag und Bekanntmachung des Hinweises auf die Patenterteilung: **12.03.2025**
(21) Anmeldenummer: 20723384.2
(22) Anmeldetag: 30.04.2020
(51) Int. Cl.: G01S 17/894, G01S 7/4863, G01S 17/10, G01S 7/481

(54) **ABSTANDSMESSSYSTEM**
DISTANCE MEASURING SYSTEM
SYSTÈME DE MESURE DE DISTANCE

(30) Priorität: 03.05.2019 DE 102019206378
(43) Veröffentlichungstag der Anmeldung: 09.03.2022
(73) Patentinhaber: Audi AG, 85049 Ingolstadt (DE)
(72) Erfinder: KLUG, Markus, 85057 Ingolstadt (DE); MOLL, Tobias, 85055 Ingolstadt (DE); SCHEUCHENPFLUG, Johannes, 85107 Baar-Ebenhausen (DE)
(74) Vertreter: Hofstetter, Schurack & Partner
(86) Internationale Anmeldenummer: PCT/EP2020/062108
(87) Internationale Veröffentlichungsnummer: WO 2020/225120

(56) Entgegenhaltungen:
- DE-A1- 102016 118 471
- DE-A1- 102017 208 896
- US-A1- 2018 232 048

## Beschreibung

Die Erfindung betrifft ein Abstandsmesssystem.

Ein Abstandsmesssystem kann beispielsweise ein LIDAR-System umfassen. Das LIDAR-System ("Light Detection and Ranging") ist eine optische Methode, bei der über eine Laufzeitmessung von Lichtpulsen eine Entfernung zu einem Objekt, das sich in einem Raumbereich oder Messvolumen befindet, bestimmt werden kann. Es sind bereits verschiedene LIDAR-Systeme bekannt, die mittels optischer Elemente den Lichtstrahl in das Messvolumen leiten können und einen reflektierten Lichtstrahl von dem Messvolumen empfangen können, um diesen auf eine Detektorvorrichtung zu lenken. Die Abstandsmessung beruht auf einer Laufzeitmessung des Lichts von der Lichtquelle zum Detektor.

Aus der US 2018/0106901 A1 ist ein LIDAR-Sensor zur Detektion eines Objekts in der Umgebung und ein Verfahren zur Aktivierung eines LIDAR-Sensors bekannt.

Aus der DE 10 2016 220 232 A1 ist ein optisches Element für ein LIDAR-System bekannt, das eine Aufweitungsoptik und eine Projektionslinse aufweist, wobei die Aufweitungsoptik und/oder die Projektionslinse durch ein holographisches Element ausgebildet sind.

Aus der US 2018/0232048 A1 ist ein Objektverfolger mit einem Wellenleiter und zumindest einer in dem Wellenleiter ausgebildeten Gitterlamelle bekannt. Hierbei breitet sich Beleuchtungslicht entlang eines ersten optischen Pfads von einer Quelle zu einem Objekt aus, wobei Licht, das von zumindest einer Oberfläche des Objekts refeltiert wurde, von den Gitterlamellen in einem zweiten optischen Pfad zu einem Detektor abgelenkt wird.

Aus der DE 10 2016 118 471 A1 ist eine optische Erfassungsvorrichtung zum Anordnen an einem Anbauteil eines Kraftfahrzeugs und zum Überwachen eines an das Anbauteil angrenzenden Bereiches bekannt.

Aus der DE 10 2017 208 896 A1 ist eine LIDAR-Vorrichtung zum Abtasten eines Abtastbereichs mit mindestens einem Strahl bekannt, aufweisen mindestens eine Strahlquelle zum Erzeugen des mindestens einen Strahls und zum Einkoppeln des mindestens einen Strahls in mindestens einen Lichtwellenleiter, eine Ablenkvorrichtung zum Ablenken des mindestens einen Strahls in den Abtastbereich, aufweisend eine Empfangseinheit zum Empfangen mindestens eines an einem Objekt reflektierten Strahls und zum Ablenken des mindestens einen reflektierten Strahls auf einen Detektor, wobei die Ablenkvorrichtung ein holographisches optisches Element und einen Spatial Light Modulator aufweist.

Nachteilig aus den bekannten Abstandsmesssystemen ist es, dass separate optische Elemente zueinander ausgerichtet werden müssen und beispielsweise durch eine mechanische Belastung verrutschen können.

Der Erfindung liegt die Aufgabe zugrunde, ein Abstandsmesssystem bereitzustellen, das robust gegenüber einer mechanischen Belastung ist.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren offenbart.

Durch die Erfindung ist ein Abstandsmesssystem bereitgestellt. Das Abstandsmesssystem weist ein Trägermedium auf, das beispielsweise aus Glas oder aus Kunststoff gefertigt ist und welches dazu ausgebildet ist, als Lichtleiter mittels interner Reflexion eingekoppeltes Licht zu übertragen. Insbesondere kann als Trägermedium eine Glasplatte vorgesehen sein. Das Trägermedium weist einen Messbereich für eine Abstrahlung und Empfangen von Licht, einen Einkoppelbereich und einen Detektorbereich auf, die in unterschiedlichen Abschnitten des Trägermediums angeordnet sind. Durch die starre Kopplung der besagten Bereiche mittels des Trägermediums kann das beschriebene Verrutschen verhindert werden. Die Abstandsmessfunktion, die eine LIDAR-Funktion sein kann, wird über die im Folgenden beschriebene erfindungsspezifische Lichtführung erreicht.

Das Abstandsmesssystem umfasst eine Lichtquelle, die dazu ausgebildet und angeordnet ist, Licht mit einer vorgegebenen Wellenlänge auf den Einkoppelbereich abzustrahlen. Die Lichtquelle kann insbesondere eine LED oder einen Laser, vorzugsweise eine Laserdiode, umfassen, die Licht mit der vorgegebenen Wellenlänge abstrahlen kann. Die vorgegebenen Wellenlänge bezieht sich dabei auf eine Abstrahlwellenlänge der Lichtquelle, die je nach verwendeter LED oder verwendeten Laser vorgegeben ist. Vorzugsweise kann die vorgegebene Wellenlänge in einem infraroten Wellenlängenbereich von 800 Nanometern bis 1000 Nanometern liegen, insbesondere bei 850 Nanometern, 905 Nanometern, 1064 Nanometern oder 1550 Nanometern.

Der Einkoppelbereich ist als ein holographisches Element mit einer Einkoppelbeugungsstruktur ausgebildet und dazu ausgelegt, Licht mit der vorgegebenen Wellenlänge, das von der Lichtquelle auf die Einkoppelbeugungsstruktur fällt, in das Trägermedium in Richtung des Messbereichs einzukoppeln, wobei der Messbereich als eine Kombination aus einem holographischen Element mit einer Abstrahlbeugungsstruktur und einem holographischen Element mit einer Empfangsbeugungsstruktur ausgebildet ist, wobei die Abstrahlbeugungsstruktur dazu ausgelegt ist, eingekoppeltes Licht der vorgegebenen Wellenlänge von dem Einkoppelbereich aus dem Trägermedium in ein zu überwachendes Messvolumen zur Reflexion an einem Objekt außerhalb des Trägermediums auszukoppeln, und wobei die Empfangsbeugungsstruktur dazu ausgelegt ist, das reflektierte Licht der vorgegebenen Wellenlänge, das von außerhalb des Trägermediums auf die Empfangsbeugungsstruktur fällt, in Richtung des Detektorbereichs in das Trägermedium einzukoppeln.

Der Detektorbereich ist als ein holographisches Element mit einer Detektorbeugungsstruktur ausgebildet und dazu ausgelegt, eingekoppeltes Licht der vorgegebenen Wellenlänge von dem Messbereich, das auf die Detektorbeugungsstruktur fällt, aus dem Trägermedium auf eine Detektorvorrichtung auszukoppeln, wobei die Detektorvorrichtung dazu ausgebildet ist, das auf die Detektorvorrichtung ausgekoppelte Licht der vorgegebenen Wellenlänge zu erfassen und aus einer Lichtlaufzeit des Lichts von der Lichtquelle zu der Detektorvorrichtung eine Distanz zu dem Objekt zu bestimmen.

Mit anderen Worten kann Licht mit einer vorgegebenen Wellenlänge von einer Lichtquelle in einen Einkoppelbereich abgestrahlt werden, wo es von einer Einkoppelbeugungsstruktur, die ein holographisches Element sein kann, in ein Trägermedium einkoppelt wird. Innerhalb des Trägermediums kann das Licht durch interne Reflexion, das heißt Totalreflexion, zu einem Messbereich übertragen werden.

In dem Messbereich sind zumindest zwei holographische Elemente vorgesehen, die beispielsweise je eine eigene Beugungsstruktur aufweisen können, nämlich die Abstrahlbeugungsstruktur und die Empfangsbeugungsstruktur, wobei die holographischen Elemente beispielsweise in einer Schichtenbauweise mittels eines Transferklebers miteinander verbunden sein können. Die Abstrahlbeugungsstruktur kann das Licht aus dem Trägermedium auskoppeln und auf ein zu überwachendes Messvolumen abstrahlen, in dem das Licht an einem Objekt reflektiert werden kann und zurück in das Trägermedium fallen kann, wo die Empfangsbeugungsstruktur das reflektierte Licht in Richtung des Detektorbereichs in das Trägermedium einkoppeln kann. In Richtung des Detektorbereichs bedeutet hier eine makroskopische Richtung vom Messbereich zum Detektorbereich entlang des Trägermediums, beziehungsweise einen Richtungsvektor in die Ausbreitungsrichtung des Lichts mittels interner Reflexion. Ein Lichtpfad kann hier natürlich aufgrund der internen Reflexion einen Zick Zack Verlauf aufweisen.

Auch Detektorbereich ist als ein holographisches Element mit einer Detektorbeugungsstruktur ausgebildet, die das von dem Objekt im Messvolumen reflektierte Licht auf eine Detektorvorrichtung beugen kann. Die Detektorvorrichtung kann dann das eintreffende Signal des reflektierten Lichts detektieren und aus einer Laufzeit des Lichts von der Lichtquelle zu der Detektorvorrichtung eine Distanz zu dem Objekt bestimmen. Vorzugsweise kann die Lichtquelle hierzu das Licht in einem Lichtpuls abstrahlen, wobei gleichzeitig zur Abstrahlung des Lichtpulses eine Zeitmessung gestartet werden kann, die beim Eintreffen des Lichtpulses auf die Detektorvorrichtung gestoppt wird. Aus dieser Zeit kann dann mittels der Lichtgeschwindigkeit und einer Berücksichtigung der Laufzeit des Lichts in dem Abstandsmesssystem, das bedeutet nur die Laufzeit des Lichts von dem Verlassen des Messbereichs bis zum Wiedereintritt in den Messbereich wird gemessen, der Abstand zu dem Objekt bestimmt werden.

Ein holographisches Element, das auch als holographisch-optisches Element (HOE) bezeichnet wird, ist ein optisches Element, dessen Funktionsprinzip auf Holographie beruht und das mittels holographischer Verfahren, das heißt holographischer Belichtung, hergestellt werden kann. Dazu kann ein Interferenzmuster, das bei einer Überlagerung zweier kohärenter Wellen gleicher Wellenlänge entsteht, auf einer lichtempfindlichen Schicht des holographischen Elements aufgezeichnet werden. Auf diese Weise lassen sich optische Gitter, Linsen, Spiegel und Strahlteiler herstellen, die Eigenschaften wie entsprechende konventionelle optische Elemente besitzen, jedoch eine geringere Dicke aufweisen.

Durch die Erfindung ergibt sich der Vorteil, dass das Abstandsmesssystem robuster und widerstandsfähiger gegenüber äußeren Einflüssen, wie beispielsweise einer mechanischen Belastung, ist, da eine kompaktere Bauweise mit weniger separaten Bauteilen erreicht werden kann. Des Weiteren wird für das Abstandsmesssystem weniger Bauraum benötigt. Zusätzlich könnte das Abstandsmesssystem durch die Lichtleitung des Trägermediums auf transparente und gekrümmte Flächen aufgebracht werden, wie beispielsweise in eine Fenster- oder Seitenscheibe oder einen Scheinwerfer eines Kraftfahrzeugs oder in ein Display, insbesondere in ein Handydisplay.

Des Weiteren ist vorgesehen, dass der Einkoppelbereich und der Detektorbereich eine kleinere Abmessung als der Messbereich aufweisen, wobei die Einkoppelbeugungsstruktur eine Zerstreuungsgitterstruktur aufweist, die dazu ausgebildet ist, Lichtstrahlen des Lichts, das auf die Einkoppelbeugungsstruktur fällt, in Abhängigkeit eines Einfallsortes unterschiedlich stark abzulenken, sodass die Einkoppelbeugungsstruktur die Lichtstahlen auf die Abstrahlbeugungsstruktur auffächert oder streut, und wobei die Empfangsbeugungsstruktur eine Bündelungsgitterstruktur aufweist, die dazu ausgebildet ist, das reflektierte Licht, das von außerhalb des Trägermediums auf die Empfangsbeugungsstruktur fällt, in Abhängigkeit des Einfallsortes unterschiedlich stark abzulenken, sodass die Empfangsbeugungsstruktur die Lichtstrahlen auf die Detektorbeugungsstruktur hin fokussiert und wobei die Detektorbeugungsstruktur eine entsprechende Zerstreuungsbeugungsstruktur aufweist, die dazu ausgebildet ist, Lichtstrahlen des Lichts zum Auskoppeln aus dem Trägermedium auf die Detektorvorrichtung zu parallelisieren. Mit anderen Worten kann eine Abbildung des Einkoppelbereichs auf eine Abmessung des Messbereichs vergrößert werden und eine Abbildung des Messbereichs auf eine Abmessung des Detektorbereich verkleinert werden, sodass eine Aufweitungsoptik beziehungsweise eine Kollimationsoptik mittels der Beugungsstrukturen gebildet werden kann.

Eine Bündelungsgitterstruktur kann eine inhomogene Beugungsstruktur aufweisen, die beispielsweise Lichtstrahlen von einem Rand der Beugungsstruktur stärker beugen kann als Lichtstrahlen von einer Mitte der Beugungsstruktur, wodurch die Lichtstrahlen fokussiert werden können. Dementsprechend kann eine Zerstreuungsgitterstruktur eine Gitterstruktur aufweisen, bei der Lichtstrahlen je nach auftreffender Position aufgefächert werden können. Vorzugsweise sind in dieser Ausführungsform die Bündelungsgitterstruktur und die Zerstreuungsgitterstruktur und die entsprechenden Abstände der beiden Strukturen so gewählt, dass die Lichtstrahlen von der Bündelungsgitterstruktur zu der Zerstreuungsgitterstruktur zusammenlaufen und von der Zerstreuungsgitterstruktur wieder parallelisiert werden oder alternativ von der Zerstreuungsgitterstruktur zu der Bündelungsgitterstruktur auseinanderlaufen und von der Bündelungsgitterstruktur wieder parallelisiert oder fokussiert werden. Diese Anordnung ist vergleichbar mit einem Galilei-Fernrohr, bei dem eine Sammellinse und eine Zerstreuungslinse derart hintereinander angeordnet sind, dass die Brennweiten der beiden Linsen hinter der Zerstreuungslinse in einem Punkt zusammenfallen. Hierdurch ergibt sich der Vorteil, dass ein im Vergleich zum Messbereich kleiner Detektor für die Detektorvorrichtung verwendet werden kann und keine aufwändige Strahlaufweitung im Einkoppelbereich benötigt wird, wodurch Kosten eingespart werden können.

Zu der Erfindung gehören auch Ausführungsformen, durch die sich zusätzliche Vorteile ergeben.

Eine Ausführungsform sieht vor, dass die Einkoppelbeugungsstruktur, die Abstrahlbeugungsstruktur, die Empfangsbeugungsstruktur und die Detektorbeugungsstruktur als ein optisches Gitter ausgebildet sind, insbesondere ein holographisches Volumengitter oder ein holographisches Oberflächengitter.

Optische Gitter, auch Beugungsgitter genannt, sowie deren Wirkungsweise und Herstellungsverfahren sind dabei allgemein bekannt. Grundsätzlich können optische Gitter als zumindest abschnittsweise periodische Strukturen, sogenannte Gitterstrukturen, in einem Substrat ausgebildet sein, die durch den physikalischen Effekt der Beugung eine Lichtlenkung, wie sie zum Beispiel von Spiegeln, Linsen oder Prismen bekannt ist, herbeiführen können. Fällt Licht, d.h. fallen Lichtstrahlen auf das optische Gitter, wobei die einfallenden Lichtstrahlen insbesondere die Bragg-Gleichung erfüllen, werden die Lichtstrahlen durch das optische Gitter gebeugt oder abgelenkt. Die Lichtlenkung kann somit insbesondere durch Interferenzerscheinungen der durch das optische Gitter gebeugten Lichtstrahlen erfolgen. Die Ablenkstruktur kann entsprechend auch als Beugungsstruktur bezeichnet werden. Ein holographisches Oberflächengitter und ein holographisches Volumengitter sind holographisch-optische Elemente, die insbesondere durch ein Holographieverfahren hergestellt werden können.

Vorzugsweise kann ein optisches Gitter gegenüber dem einfallenden Licht winkel- beziehungsweise richtungsselektiv und/oder wellenlängen- beziehungsweise frequenzselektiv ausgebildet sein. Somit kann nur Licht, das aus einer vorbestimmten Einfallsrichtung, zum Beispiel in einem vorbestimmten Winkel, auf ein optisches Gitter fällt, abgelenkt werden. Licht, das aus einer anderen Richtung auf das optische Gitter fällt, wird vorzugsweise nicht abgelenkt oder umso weniger, je größer der Unterschied zur vorbestimmten Einfallsrichtung ist. Zusätzlich oder alternativ kann auch nur Licht einer Wellenlänge oder Licht, welches höchstens um einen vorbestimmten Wellenlängenbereich von der vorbestimmten Wellenlänge abweicht, von dem optischen Gitter in einem bestimmten Beugungswinkel abgelenkt werden. Anders formuliert kann beispielsweise eine Optimalwellenlänge vorgegeben sein, bei der nur ein Anteil des Lichts in einem bestimmten Wellenlängen- oder Frequenzbereich um die Optimalwellenlänge von dem optischen Gitter abgelenkt wird (beispielsweise eine zentrale Optimalwellenlänge und ein Bereich mit Wellenlängenwerten bis +/- 10 Prozent der Optimalwellenlänge), der übrige Anteil des Lichts kann hingegen ohne abgelenkt zu werden durch das Gitter propagieren. Von polychromatischem Licht, welches auf das optische Gitter trifft, kann somit wenigstens ein monochromatischer Lichtanteil abgespaltet werden. Der Ablenkeffekt ergibt sich somit frequenzselektiv und/oder winkelselektiv, wobei der Ablenkeffekt für ein Optimalwellenlänge maximal ist und zu längeren und kürzeren Wellenlängen hin abfällt oder schwächer wird, beispielsweise gemäß einer Gaußglocke abfällt. Insbesondere wirkt der Ablenkeffekt nur auf einen Bruchteil des sichtbaren Lichtspektrums und/oder in einem Winkelbereich kleiner als 90 Grad.

Besonders bevorzugt können optische Gitter mittels Belichtung eines Substrats, also beispielsweise fotolithografisch oder holografisch, hergestellt werden. **In** diesem Zusammenhang können die optischen Gitter dann auch als holografische oder holografisch-optische Gitter bezeichnet werden. Es sind zwei Arten von holografisch-optischen Gittern bekannt: holografische Oberflächengitter (surface holografic gratings, kurz: SHG) und holografische Volumengitter (volume holografic gratings, kurz: VHG). Bei holografischen Oberflächengittern kann die Gitterstruktur durch optisches Verformen einer Oberflächenstruktur des Substrats erzeugt werden. Durch die veränderte Oberflächenstruktur kann auftreffendes Licht abgelenkt, zum Beispiel reflektiert werden. Beispiele für holografische Oberflächengitter sind sogenannte Sägezahn- oder Blazegitter. Im Gegensatz dazu kann die Gitterstruktur bei holografischen Volumengittern in das ganze Volumen oder einen Teilbereich des Volumens des Substrats eingearbeitet sein. Holografische Oberflächengitter und holografische Volumengitter sind in der Regel frequenzselektiv.

Als Material für ein Substrat zum Einarbeiten eines optischen Gitters eignet sich zum Beispiel besonders Glas, Vorzugsweise Quarzglas. Alternativ oder zusätzlich kann auch ein Polymer, insbesondere Fotopolymer, oder eine Folie, insbesondere eine fotosensitive Folie, zum Beispiel aus Kunststoff oder einem organischen Stoff verwendet werden. Zur Verwendung derartiger Substrate, sollte zusätzlich beachtet werden, dass das Material, insbesondere in Substratform, flexible und lichtwellenleitende Eigenschaften aufweist. Substrate die eine Ablenkstruktur zum Beugen von Licht, beispielsweise in Form eines optischen Gitters aufweisen, können auch als holografisch-optische Elemente (HOE) bezeichnet werden.

Eine weitere Ausführungsform sieht vor, dass der Einkoppelbereich, der Messbereich und der Detektorbereich einstückig mit dem Trägermedium ausgebildet sind oder das Trägermedium als separates Element zu dem Einkoppelbereich, dem Messbereich und dem Detektorbereich ausgebildet ist.

Im ersten Fall können der Einkoppelbereich, der Messbereich und der Detektorbereich somit beispielsweise direkt in eine Oberflächenstruktur des Trägermediums eingearbeitet werden. Somit kann das Trägermedium selbst als HOE ausgebildet sein, beispielsweise geätzt oder gelasert sein. Im zweiten Fall können der Einkoppelbereich, der Messbereich, der Detektorbereich und das Trägermedium separat ausgebildet sein. Dabei können der Einkoppelbereich, der Messbereich und der Detektorbereich beispielsweise jeweils ein eigenes Element bilden und das Trägermedium kann ein weiteres Element bilden, welches an den anderen Elementen anliegt. Somit können die jeweiligen Bereiche als wenigstens ein jeweiliges HOE ausgebildet sein. Dies ermöglicht eine größer Auswahl bei der Nutzung eines Trägermediums. Beispielsweise können der Einkoppelbereich, der Messbereich und der Detektorbereich in unterschiedlichen Abschnitten einer holografischen Folie oder Platte ausgebildet sein. Zum Befestigen der Folie oder Platte an dem Trägermedium kann die Folie oder Platte an das Trägermedium angeklebt sein. Alternativ kann die holografische Folie auch als Adhäsionsfolie ausgebildet sein und direkt, also ohne Klebstoff, durch molekulare Kräfte an der Oberfläche des Trägermediums haften.

Eine weitere Ausführungsform sieht vor, dass das holographische Element der Abstrahlbeugungsstruktur und das holographische Element der Empfangsbeugungsstruktur miteinander verbunden sind, wobei die Empfangsbeugungsstruktur aus Sicht des Messvolumens zwischen diesem und der Abstrahlbeugungsstruktur angeordnet ist und die Empfangsbeugungsstruktur die Abstrahlbeugungsstruktur zumindest teilweise überlagert. Mit anderen Worten können die Abstrahlbeugungsstruktur und die Empfangsbeugungsstruktur als zwei holographische Elemente ausgebildet sein, die flächig miteinander verbunden sind, insbesondere durch einen Transferkleber verklebt, wobei die Abstrahlbeugungsstruktur das Licht von der Lichtquelle durch die Empfangsbeugungsstruktur hindurchstrahlen kann, da diese für den Einfallswinkel des Lichts von der Abstrahlbeugungsstruktur transparent ist. Das reflektierte Licht wiederum kann von der vor der Abstrahlbeugungsstruktur angeordneten Empfangsbeugungsstruktur abgelenkt werden, da hier der Einfallswinkel gemäß der Gitterstruktur der Empfangsbeugungsstruktur sensitiv ist. Die holographischen Elemente können auch zueinander versetzt angeordnet sein, so dass sie sich nur in einem Teilbereich überlagern. Außerdem können auch mehr als zwei holographische Elemente, beispielsweise eine Schichtstruktur von drei oder mehr, verwendet werden. Durch diese Ausführungsform ergibt sich der Vorteil, dass ein Abstrahl- und Empfangsbereich im Messbereich gleich ausgebildet sein können, wodurch ein Lichtweg außerhalb des Trägermediums zu dem Objekt in Hin- und Rückrichtung gleich ausgebildet sein kann. Zusätzlich kann eine stabilere Bauform des Abstandsmesssystems erreicht werden, da die holographischen Elemente nicht separat ausgebildet sind, sondern miteinander verbunden sind, wodurch eine Verschiebung der Abstrahlbeugungsstruktur und der Empfangsbeugungsstruktur erschwert wird.

Eine weitere Ausführungsform sieht vor, dass die Abstrahlbeugungsstruktur eine Bündelungsgitterstruktur und/oder eine Zerstreuungsgitterstruktur aufweist, die jeweils dazu ausgebildet sind, unterschiedliche Lichtstrahlend des Lichts, das auf die Abstrahlbeugungsstruktur fällt, in Abhängigkeit des Einfallsortes unterschiedlich stark abzulenken. Damit ist gemeint, dass eine unterschiedliche Winkeländerung der jeweiligen Lichtstrahlen des Lichts je nach Einfallsort erreicht werden kann, beispielsweise können in Bezug auf eine optische Achse äußere Lichtstrahlen mit einem größeren Winkel abgelenkt werden als innere Lichtstrahlen. Insbesondere kann vorgesehen sein, dass ein Zusammenwirken der Einkoppelbeugungsstruktur mit der Abstrahlbeugungsstruktur die Lichtstrahlen zum Auskoppeln aus dem Trägermedium parallelisiert, auffächert oder auf einen Brennpunkt fokussiert. Auch kann die Abstrahlbeugungsstruktur mehrere Bereiche aufweisen, die je einer der Gitterstrukturen aufweisen, wodurch die Abstrahlbeugungsstruktur auch eine Bündelungsgitterstruktur und eine Zerstreuungsgitterstruktur aufweisen kann. Diese Ausführungsform ergibt den Vorteil, dass verschiedene Abstrahlcharakteristika erzeugt werden können und beispielsweise ein großes Messvolumen durch einen aufgefächerten Strahl abgetastet werden kann oder ein Objekt in dem Messvolumen durch eine fokussierten Lichtstrahl genauer abgetastet werden kann.

Vorzugsweise ist vorgesehen, dass die Abstrahlbeugungsstruktur in vorgegebene Unterbereiche, die beispielsweise eine unterschiedliche Größe aufweisen können, aufgeteilt ist, wobei sich die vorgegebenen Unterbereiche in der bereitgestellten Bündelungsgitterstruktur oder Zerstreuungsgitterstruktur unterscheiden, um die Lichtstrahlen des Lichts zum Auskoppeln aus dem Trägermedium bereichsweise in Abhängigkeit des Einfallsortes unterschiedlich stark abzulenken, um eine Abstrahlcharakteristik festzulegen. Beispielsweise kann somit erreicht werden, dass vorgegebene Unterbereiche der Abstrahlbeugungsstruktur die Lichtstrahlen fokussieren, um eine feinere Abtastung des Messvolumens zu erzeugen, und vorgegebene Unterbereiche können die Lichtstrahlen in einem Abstrahlbereich auffächern, um eine großflächige Abtastung zu erzeugen. Durch diese Ausführungsform ergibt sich der Vorteil, dass verschiedene Abstrahlcharakteristiken festgelegt werden können, um Bereiche eines Messvolumens mit unterschiedlicher Genauigkeit abzutasten. Beispielsweise kann vorgesehen sein, dass ein mittiger Unterbereich dazu ausgebildet ist, eine feinere Abtastung durchzuführen und äußere Unterbereiche dazu, eine gröbere Abtastung durchzuführen.

Eine Ausführungsform sieht vor, dass die Detektorvorrichtung eine Photodiodenmatrix aufweist, wobei die Photodiodenmatrix dazu ausgelegt ist, das auf die Detektorvorrichtung ausgekoppelte Licht entsprechend einer Eintrittsposition auf den Messbereich und/oder eines Einfallswinkels auf den Messbereich zuzuordnen. Mit anderen Worten kann eine Photodiodenmatrix, die insbesondere ein Photomischdetektor (PMD-Sensor), sein kann vorgesehen sein, die ähnlich einer Fotokamera das Licht entsprechend der Eintrittsposition in den Messbereich zuordnen kann, das heißt, dass die Photodiodenmatrix gleichzeitig für jede Photodiode der Photodiodenmatrix einen Abstand bestimmen kann. Alternativ oder zusätzlich kann auch vorgesehen sein, dass der Eintrittswinkel auf den Messbereich in der Photodiodenmatrix zugeordnet werden kann. Durch die Winkelselektivität der Empfangsbeugungsstruktur kann beispielsweise vorgesehen sein, dass nur Licht, das mit einem bestimmten Winkel in den Messbereich eintritt, in das Trägermedium und somit zu der Detektorvorrichtung eingekoppelt wird. Das bedeutet, dass die Empfangsbeugungsstruktur als ein Kollimator wirkt, der nur vorgegebene Eintrittswinkel weiterleitet. Beispielsweise kann die Photodiodenmatrix als Matrix von CCD- oder CMOS-Sensoren ausgebildet sein. Durch diese Ausführungsform ergibt sich der Vorteil, dass mit einer Lichtpulsabstrahlung eine Orts- und Entfernungsinformation über ein gesamtes Messvolumen bestimmt werden kann. Somit kann eine TOF-Kamera (time of flight Kamera) realisiert werden, die ein gesamtes Abstandsszenario auf einmal aufnehmen kann. Vorzugsweise kann die somit bereitgestellte TOF-Kamera verwendet werden, um eine Gestenerkennung vor einem Display oder einer Scheibe, in die das Abstandsmesssystem eingebaut sein kann, zu realisieren.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Überblicksdarstellung einer beispielshaften Ausführungsform;
- Fig. 2: eine schematische Darstellung einer Funktionsweise einer beispielhaften Ausführungsform;
- Fig. 3: eine schematische Seitenansicht gemäß einer beispielhaften Ausführungsform;
- Fig. 4: eine schematische Seitenansicht gemäß einer weiteren beispielhaften Ausführungsform.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

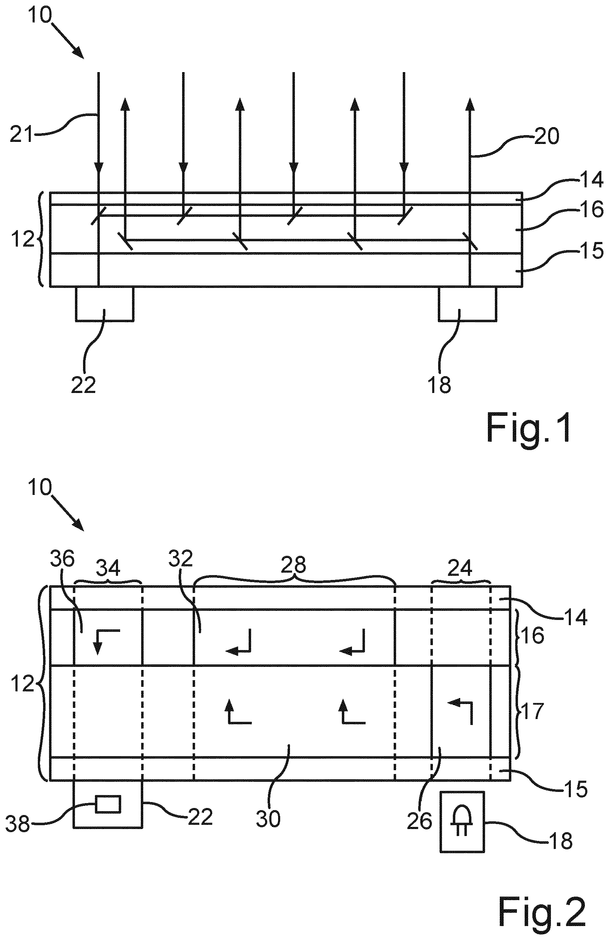

In Fig. 1 ist eine Überblicksdarstellung eines Abstandsmesssystems 10 gemäß einer beispielhaften Ausführungsform dargestellt. Das Abstandsmesssystem 10 kann beispielsweise als LIDAR-System oder als TOF-Kamera ausgebildet sein. Das Abstandsmesssystem 10 kann ein Trägermedium 12 aufweisen, das beispielsweise mittels einer Schichtbauweise gefertigt ist, wobei eine erste Schicht eine Glasplatte 14 umfassen kann und eine zweite Schicht ein oder mehrere holographische Elemente 16, die beispielsweise eine Fotopolymerfolie sein können. Das zumindest eine holographische Element 16 kann dabei auf die Glasplatte 14 aufgeklebt oder eingearbeitet sein. Zusätzlich kann eine zweite Glasplatte 15 das zumindest eine holographische Element 16 als weitere Deckschicht umschließen.

Das Abstandsmesssystem 10 kann eine Lichtquelle 18 aufweisen, die beispielsweise als eine Laserdiode ausgebildet sein kann und die Licht in das Trägermedium 12 abstrahlen kann. In dem Trägermedium 12 kann das von der Lichtquelle 18 abgestrahlte Licht durch Beugung umgelenkt werden und somit flächig über das Trägermedium 12 verteilt werden und von einer weiteren Beugungsstruktur aus dem Trägermedium 12 ausgekoppelt werden, was durch die ausgekoppelten Lichtstrahlen 20 dargestellt ist. Diese ausgekoppelten Lichtstrahlen 20 können vorzugsweise flächig in ein zu überwachendes Messvolumen zur Reflexion an einem Objekt (nicht gezeigt) außerhalb des Trägermediums abgestrahlt werden. Nach Reflexion an dem Objekt können die Lichtstrahlen als reflektiertes Licht 21 zurück in das Trägermedium 12 eintreten.

In dem Trägermedium 12 kann dann eine weitere Beugungsstruktur das reflektierte Licht auf eine Detektorvorrichtung 22 lenken, die vorzugsweise eine Fotodiode aufweisen kann und die das Eintreffen des Lichts als elektronisches Signal detektieren kann. Insbesondere kann eine Laufzeit des Lichts von einer Abstrahlung der Lichtquelle 18 bis zu der Detektion der Detektorvorrichtung 22 gemessen werden, um daraus eine Distanz zu dem Objekt zu bestimmen. Insbesondere kann dabei ein Zeitversatz abgezogen werden, der durch einen Lichtweg innerhalb des Trägermediums 12 entstehen kann.

Mit der in Fig. 2 gezeigten schematischen Darstellung des Abstandsmesssystem 10 soll eine Funktionsweise des Abstandsmesssystems 10 anhand der hier gezeigten beispielhaften Ausführungsform näher erläutert werden. In Fig. 2 ist das Abstandsmesssystem 10 mit einem Trägermedium 12, einer Lichtquelle 18 und einer Detektorvorrichtung 22 ausgebildet. Das Trägermedium 12, das als Lichtleiter ausgebildet sein kann und eingekoppeltes Licht mittels interner Reflexion übertragen kann, kann vergleichbar mit dem Ausführungsbeispiel aus Fig. 1 zwei Glasplatten 14, 15 als flächige Deckschichten für ein holographisches Element 16 und ein weiteres holographisches Element 17 aufweisen. Alternativ kann jedoch auch vorgesehen sein, dass statt der Glasplatten ein lichtleitender Kunststoff verwendet wird.

Das holographische Element 16 kann beispielsweise eine Fotopolymerfolie umfassen und mit der Glasplatte 14 über eine Klebeverbindung verbunden sein. Ferner kann das holographische Element 17 über eine Klebeverbindung mit der Glasplatte 15 verbunden sein und die beiden holographischen Elemente 14 und 15 können miteinander über einen Transferkleber verbunden sein. Die Dicke der holographischen Elemente 16, 17 kann weniger als einen Millimeter betragen und die hier dargestellten Abmessungen sind nur zur Veranschaulichung des Beispiels gewählt.

Das holographische Element 17 kann in einem Einkoppelbereich 24 derart ausgebildet sein, dass sich eine Einkoppelbeugungsstruktur 26 ergibt, die beispielsweise ein holographisches Oberflächengitter sein kann und die Licht von der Lichtquelle 18 in Richtung eines Messbereichs 28 in das Trägermedium 12 einkoppeln kann, was durch den Pfeil von unten nach oben mit Spitze nach links in der Einkoppelbeugungsstruktur 26 angedeutet ist. Ebenso kann das holographische Element 17 im Messbereich 28 mit einer Abstrahlbeugungsstruktur 30 ausgebildet sein, die beispielsweise als holographisches Volumengitter ausgebildet sein kann, und die das Licht von dem Einkoppelbereich 24 aus dem Trägermedium 12 auskoppeln kann, wobei das ausgekoppelte Licht insbesondere in eine Richtung zu einem zu messenden Objekt durch das darüber angeordnete holographische Element 16 hindurchstrahlen kann, was durch die Pfeile von rechts nach links mit Spitze nach oben angedeutet ist. Das darüber angeordnete holographische Element 16, das eine Empfangsbeugungsstruktur 32, die beispielsweise als holographisches Volumengitter ausgebildet ist, aufweist, kann dabei für das Licht, das aus Richtung der Abstrahlbeugungsstruktur kommt, transparent sein, da ein Eintrittswinkel in das holographische Element 16 eine Winkelbedingung zur Ablenkung durch das holographische Element 16 nicht erfüllt.

Insbesondere kann die Empfangsbeugungsstruktur 32 in dem Messbereich 28 derart ausgebildet sein, dass nur Licht, das einen bestimmten Einfallswinkel, insbesondere von einem Bereich außerhalb des Trägermediums 12 auf den Messbereich 28 aufweist, abgelenkt werden. Das heißt, dass die Empfangsbeugungsstruktur 32 vorzugsweise winkelselektiv sein kann und nur Eintrittswinkel von beispielsweise plus minus ein Grad von einer vordefinierten Eintrittsrichtung in das Trägermedium 12 einkoppelt. Hierdurch kann ein optischer Kollimator erzeugt werden, der beispielsweise nur Lichtstrahlen in das Trägermedium 12 zulässt, die senkrecht auf den Messbereich 28 treffen.

Folglich kann das ausgekoppelte Licht beispielsweise von einem Objekt außerhalb des Trägermediums 12 reflektiert werden und zurück auf den Messbereich 28 fallen, wo es dann von der Empfangsbeugungsstruktur 32 zurück in das Trägermedium 12 in Richtung eines Detektorbereichs 34 eingekoppelt werden kann, was durch die Pfeile von oben nach unten mit Spitze links in der Empfangsbeugungsstruktur 32 angedeutet ist.

**In** dem Detektorbereich 34 kann das holographische Element 16 derart ausgebildet sein, dass eine Detektorbeugungsstruktur 36, die beispielsweise als holographisches Oberflächengitter ausgebildet ist, das reflektierte Licht aus dem Trägermedium 12 in Richtung der Detektorvorrichtung 22 auskoppeln kann, wo dann eine Lichtlaufzeit des Lichts von der Lichtquelle 18 zu der Detektorvorrichtung 22 bestimmt werden kann. Hierbei kann die Detektorvorrichtung 22 vorzugsweise eine Photodiodenmatrix 38 aufweisen, die das auf die Detektorvorrichtung 22 ausgekoppelte Licht entsprechend einer Eintrittsposition des reflektierten Lichts auf den Messbereich, ähnlich einer Fotokamera, zuordnen kann. Beispielsweise kann ein Lichtstrahl, der auf eine Ecke des Messbereichs und damit auf eine Ecke der Empfangsbeugungsstruktur 32 fällt, auf eine entsprechende Ecke der Photodiodenmatrix 38 geleitet werden, wodurch für jeden reflektierten Lichtstrahl, der auf die Empfangsbeugungsstruktur 32 zurück reflektiert wird, eine Lichtlaufzeit bestimmt werden kann, woraus ein dreidimensionales Distanzbild bestimmt werden kann.

Der Einkoppelbereich 24, der Messbereich 28 und der Detektorbereich 34 können einstückig mit dem Trägermedium 12 ausgebildet sein. Alternativ kann jedoch auch vorgesehen sein, dass das Trägermedium 12 als separates Element zu dem Einkoppelbereich 24, dem Messbereich 28 und dem Detektorbereich 34 ausgebildet ist.

Der Einkoppelbereich 24 und der Detektorbereich 34 können insbesondere eine kleinere Abmessung als der Messbereich 28 aufweisen. Hierzu kann die Einkoppelbeugungsstruktur 26 eine Zerstreuungsgitterstruktur aufweisen, die Lichtstrahlen des Lichts von der Lichtquelle 18 in Abhängigkeit eines Einfallsorts auf die Einkoppelbeugungsstruktur 26 unterschiedlich stark ablenken kann, sodass die Einkoppelbeugungsstruktur 26 die Lichtstrahlen derart in das Trägermedium 12 einkoppelt, dass diese auf die Abstrahlbeugungsstruktur 30 aufgefächert werden. Ebenso kann die Empfangsbeugungsstruktur eine Bündelungsgitterstruktur aufweisen, die Lichtstrahlen des reflektierten Lichts von außerhalb des Trägermediums 12 in Abhängigkeit des Einfallsorts auf die Empfangsbeugungsstruktur 32 unterschiedlich stark ablenken, sodass die Lichtstrahlen auf die Detektorbeugungsstruktur 36 hin fokussiert werden. Die Detektorbeugungsstruktur 36 kann eine zu der Bündelungsgitterstruktur der Empfangsbeugungsstruktur 32 passende Zerstreuungsbeugungsstruktur aufweisen, die die Lichtstrahlen des reflektierten Lichts zum Auskoppeln aus dem Trägermedium 12 auf die Detektorvorrichtung 22 parallelisieren kann.

Die Abstrahlbeugungsstruktur 30 kann je nach Ausgestaltung des Abstandsmesssystems 10 eine Bündelungsgitterstruktur und/oder eine Zerstreuungsgitterstruktur aufweisen, die je nach Ausgestaltung einer Abstrahlcharakteristik und einem Zusammenwirken mit der Einkoppelbeugungsstruktur 26 die Lichtstrahlen zum Auskoppeln aus dem Trägermedium 12 parallelisieren, auffächern oder auf einen Brennpunkt fokussieren kann.

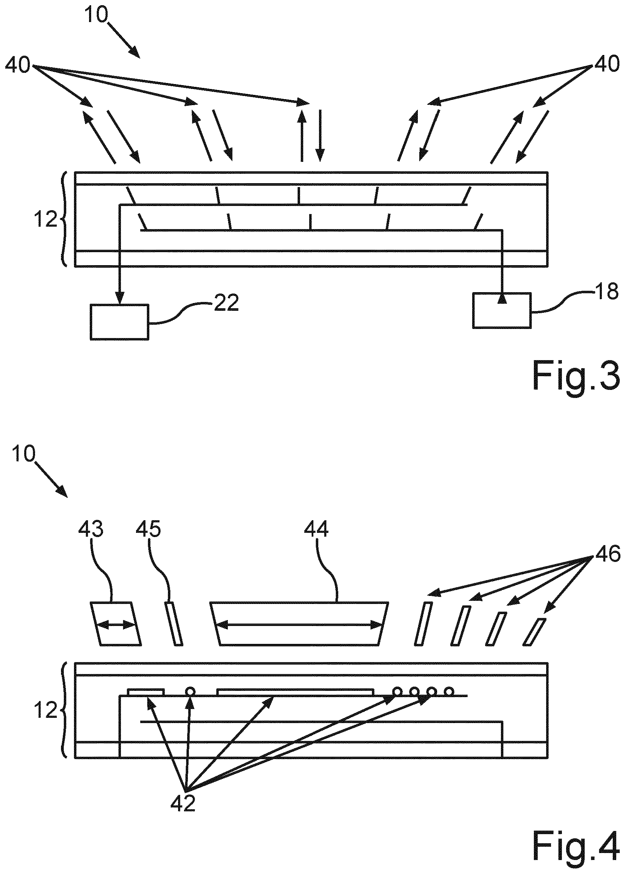

In Fig. 3 ist eine derartige beispielhafte Auffächerung von Lichtstrahlen gezeigt. Hierbei können Lichtstrahlen der Lichtquelle 18 über die Einkoppelbeugungsstruktur 26 auf die Abstrahlbeugungsstruktur 30 aufgefächert werden, wobei die Abstrahlbeugungsstruktur 30 beispielsweise eine weitere Zerstreuungsbeugungsstruktur aufweisen kann, die die Lichtstrahlen des Lichts zum Auskoppeln aus dem Trägermedium 12 auf ein zu überwachendes Messvolumen auffächert und somit einen weiten Überwachungsbereich abdecken kann. Die Empfangsbeugungsstruktur 32 kann entsprechend ausgebildet sein, sodass sie nur einen Einfallswinkel der Lichtstrahlen zum Einkoppeln in das Trägermedium 12 in Richtung der Detektorvorrichtung 22 zulässt, die den gleichen Einfallswinkel aufweisen wie die Abstrahlrichtung, was durch die Doppelpfeile 40 angedeutet ist.

In Fig. 4 ist ein Abstandsmesssystem 10 gemäß einer weiteren beispielhaften Ausführungsform dargestellt. Hierbei kann das Trägermedium 12 ähnlich ausgebildet sein wie das Trägermedium 12 in Fig. 2. Die Abstrahlbeugungsstruktur 30 kann jedoch in vorgegebene Unterbereiche 42 unterteilt sein, die insbesondere eine unterschiedliche Größe aufweisen können, und wobei sich die vorgegebenen Unterbereiche 42 in der für jeden Unterbereich bereitgestellten Gitterstruktur unterscheiden können. Beispielsweise können bestimmte Bereiche eine Zerstreuungsgitterstruktur aufweisen und andere Unterbereiche eine Bündelungsgitterstruktur, wodurch die Lichtstrahlen des Lichts zum Auskoppeln aus dem Trägermedium 12 bereichsweise unterschiedlich stark abgelenkt werden. Dadurch kann eine vorbestimmte Abstrahlcharakteristik erzeugt werden. Beispielsweise können Unterbereiche die Lichtstrahlen auffächern, wodurch ein weiter Bereich abgetastet wird, der eine geringe Auflösung aufweist, beispielsweise Bereiche 43 und 44, es können jedoch auch Bereiche vorgesehen sein, die eine Bündelungsgitterstruktur aufweisen und einen schmalen Bereich mit einer hohen Abtastrate abtasten können, wie beispielsweise Bereiche 45 und 46.

Insgesamt zeigen die Beispiele, wie durch die Erfindung ein Abstandsmesssystem, insbesondere in LIDAR oder eine TOF-Kamera, über ein holographisch optisches Element bereitgestellt werden kann.

## Patentansprüche

1. Abstandsmesssystem (10) mit
- einem Trägermedium (12), welches dazu ausgebildet ist, als Lichtleiter mittels interner Reflexion eingekoppeltes Licht zu übertragen, und aufweisend einen Messbereich (28) für eine Abstrahlung und ein Empfangen von Licht, einen Einkoppelbereich (24) und einen Detektorbereich (34), die in unterschiedlichen Abschnitten des Trägermediums angeordnet sind;
- einer Lichtquelle (18), die dazu ausgebildet und angeordnet ist, Licht mit einer vorgegebenen Wellenlänge auf den Einkoppelbereich (24) abzustrahlen; wobei
- der Einkoppelbereich (24) als ein holographisches Element mit einer Einkoppelbeugungsstruktur (26) ausgebildet und dazu ausgelegt ist, Licht mit der vorgegebenen Wellenlänge, das von der Lichtquelle (18) auf die Einkoppelbeugungsstruktur (26) fällt, in das Trägermedium (12) in Richtung des Messbereichs (28) einzukoppeln; wobei
- der Messbereich (28) als eine Kombination aus einem holographischen Element (17) mit einer Abstrahlbeugungsstruktur (30) und einem holographischen Element (16) mit einer Empfangsbeugungsstruktur (32) ausgebildet ist, wobei die Abstrahlbeugungsstruktur (30) dazu ausgelegt ist, eingekoppeltes Licht der vorgegebenen Wellenlänge von dem Einkoppelbereich (24) aus dem Trägermedium in ein zu überwachendes Messvolumen zur Reflexion an einem Objekt außerhalb des Trägermediums auszukoppeln, und wobei die Empfangsbeugungsstruktur (32) dazu ausgelegt ist, das reflektierte Licht der vorgegebenen Wellenlänge, das von außerhalb des Trägermediums auf die Empfangsbeugungsstruktur (32) fällt, in Richtung des Detektorbereichs (34) in das Trägermedium (12) einzukoppeln; wobei
- der Detektorbereich (34) als ein holographisches Element mit einer Detektorbeugungsstruktur (36) ausgebildet und dazu ausgelegt ist, eingekoppeltes Licht der vorgegebenen Wellenlänge von dem Messbereich (28), das auf die Detektorbeugungsstruktur (36) fällt, aus dem Trägermedium (12) auf eine Detektorvorrichtung (22) auszukoppeln; wobei
- die Detektorvorrichtung (22) dazu ausgebildet ist, das auf die Detektorvorrichtung ausgekoppelte Licht der vorgegebenen Wellenlänge zu erfassen und aus einer Lichtlaufzeit des Lichts von der Lichtquelle (18) zu der Detektorvorrichtung (22) eine Distanz zu dem Objekt zu bestimmen;
- wobei der Einkoppelbereich (24) und der Detektorbereich (34) eine kleinere Abmessung als der Messbereich (28) aufweisen, **dadurch gekennzeichnet, dass** die Einkoppelbeugungsstruktur (26) eine Zerstreuungsgitterstruktur aufweist, die dazu ausgebildet ist, Lichtstrahlen des Lichts, das auf die Einkoppelbeugungsstruktur (26) fällt, in Abhängigkeit eines Einfallsortes unterschiedlich stark abzulenken, sodass die Einkoppelbeugungsstruktur (26) die Lichtstrahlen auf die Abstrahlbeugungsstruktur (30) auffächert, und
- wobei die Empfangsbeugungsstruktur (32) eine Bündelungsgitterstruktur aufweist, die dazu ausgebildet ist, das reflektierte Licht, das von außerhalb des Trägermediums auf die Empfangsbeugungsstruktur (32) fällt, in Abhängigkeit des Einfallsortes unterschiedlich stark abzulenken, sodass die Empfangsbeugungsstruktur (32) die Lichtstrahlen auf die Detektorbeugungsstruktur (36) hin fokussiert, und wobei die Detektorbeugungsstruktur (36) eine entsprechende Zerstreuungsbeugungsstruktur aufweist, die dazu ausgebildet ist, Lichtstrahlen des Lichts zum Auskoppeln aus dem Trägermedium (12) auf die Detektorvorrichtung (22) zu parallelisieren.

2. Abstandsmesssystem (10) nach Anspruch 1, wobei die Einkoppelbeugungsstruktur (26), die Abstrahlbeugungsstruktur (32), die Empfangsbeugungsstruktur (32) und die Detektorbeugungsstruktur (36) als ein optisches Gitter ausgebildet sind, insbesondere ein holographisches Volumengitter oder ein holographisches Oberflächengitter.

3. Abstandsmesssystem (10) nach einem der vorhergehenden Ansprüche, wobei der Einkoppelbereich (24), der Messbereich (28) und der Detektorbereich (34) einstückig mit dem Trägermedium (12) ausgebildet sind oder wobei das Trägermedium (12) als separates Element zu dem Einkoppelbereich (24), dem Messbereich (28) und dem Detektorbereich (34) ausgebildet ist.

4. Abstandsmesssystem (10) nach einem der vorhergehenden Ansprüche, wobei das holographische Element (17) der Abstrahlbeugungsstruktur und das holographische Element (16) der Empfangsbeugungsstruktur miteinander verbunden sind, wobei aus Sicht des Messvolumens die Empfangsbeugungsstruktur (32) zwischen diesem und der Abstrahlbeugungsstruktur (30) angeordnet ist und die Empfangsbeugungsstruktur (32) die Abstrahlbeugungsstruktur (30) zumindest teilweise überlagert.

5. Abstandsmesssystem (10) nach einem der vorhergehenden Ansprüche, wobei die Abstrahlbeugungsstruktur (30) eine Bündelungsgitterstruktur und/oder eine Zerstreuungsgitterstruktur aufweist, die jeweils dazu ausgebildet sind, unterschiedliche Lichtstrahlen des Lichts, das auf die Abstrahlbeugungsstruktur (30) fällt, in Abhängigkeit des Einfallsortes unterschiedlich stark abzulenken.

6. Abstandsmesssystem (10) nach Anspruch 5, wobei die Abstrahlbeugungsstruktur (30) in vorgegebene Unterbereiche aufgeteilt ist, wobei sich die vorgegebenen Unterbereiche in der bereitgestellten Bündelungsgitterstruktur oder Zerstreuungsgitterstruktur unterscheiden, um die Lichtstrahlen des Lichts zum Auskoppeln aus dem Trägermedium (12) bereichsweise in Abhängigkeit des Einfallsortes unterschiedlich stark abzulenken, um eine Abstrahlcharakteristik festzulegen.

7. Abstandsmesssystem (10) nach einem der vorhergehenden Ansprüche, wobei die Detektorvorrichtung (22) eine Photodiodenmatrix (38) aufweist, wobei die Photodiodenmatrix (28) dazu ausgelegt ist, das auf die Detektorvorrichtung (22) ausgekoppelte Licht entsprechend einer Eintrittsposition auf den Messbereich (28) und/oder eines Eintrittswinkels auf den Messbereich zuzuordnen.

## Claims

1. A distance measuring system (10) comprising
- a carrier medium (12), which is formed to transfer coupled-in light by means of internal reflection as a light guide, and comprising a measuring area (28) for emitting and receiving light, a coupling-in area (24) and a detector area (34), which are arranged in different sections of the carrier medium;
- a light source (18), which is formed and arranged to emit light with a preset wavelength to the coupling-in area (24); wherein
- the coupling-in area (24) is formed as a holographic element with a coupling-in diffraction structure (26) and configured to couple light with the preset wavelength, which is incident on the coupling-in diffraction structure (26) from the light source (18), into the carrier medium (12) towards the measuring area (28); wherein
- the measuring area (28) is formed as a combination of a holographic element (17) with an emission diffraction structure (30) and a holographic element (16) with a reception diffraction structure (32), wherein the emission diffraction structure (30) is configured to couple coupled-in light of the preset wavelength from the coupling-in area (24) out of the carrier medium into a measurement volume to be monitored for reflection on an object outside of the carrier medium, and wherein the reception diffraction structure (32) is configured to couple the reflected light of the preset wavelength, which is incident on the reception diffraction structure (32) from outside of the carrier medium, into the carrier medium (12) towards the detector area (34); wherein
- the detector area (34) is formed as a holographic element with a detector diffraction structure (36) and configured to couple coupled-in light of the preset wavelength from the measuring area (28), which is incident on the detector diffraction structure (36), out of the carrier medium (12) onto a detector device (22); wherein
- the detector device (22) is formed to detect the light of the preset wavelength coupled out onto the detector device and to determine a distance to the object from a light propagation time of the light from the light source (18) to the detector device (22);
- wherein the coupling-in area (24) and the detector area (34) have a smaller dimension than the measuring area (28),
**characterized in that**
the coupling-in diffraction structure (26) comprises a dispersing grating structure, which is formed to deflect light beams of the light, which is incident on the coupling-in diffraction structure (26), to different extent depending on a location of incidence, such that the coupling-in diffraction structure (26) expands the light beams onto the emission diffraction structure (30), and
- wherein the reception diffraction structure (32) comprises a concentrating grating structure, which is formed to deflect the reflected light, which is incident on the reception diffraction structure (32) from outside of the carrier medium, to different extent depending on the location of incidence, such that the reception diffraction structure (32) focuses the light beams towards the detector diffraction structure (36), and wherein the detector diffraction structure (36) comprises a corresponding dispersing diffraction structure, which is formed to parallelize light beams of the light for coupling out of the carrier medium (12) onto the detector device (22).

2. The distance measuring system (10) according to claim 1, wherein the coupling-in diffraction structure (26), the emission diffraction structure (32), the reception diffraction structure (32) and the detector diffraction structure (36) are formed as an optical grating, in particular a holographic volume grating or a holographic surface grating.

3. The distance measuring system (10) according to any one of the preceding claims, wherein the coupling-in area (24), the measuring area (28) and the detector area (34) are formed integrally with the carrier medium (12) or wherein the carrier medium (12) is formed as a separate element to the coupling-in area (24), the measuring area (28) and the detector area (34).

4. The distance measuring system (10) according to any one of the preceding claims, wherein the holographic element (17) of the emission diffraction structure and the holographic element (16) of the reception diffraction structure are connected to each other, wherein, from the view of the measurement volume, the reception diffraction structure (32) is arranged between it and the emission diffraction structure (30) and the reception diffraction structure (32) at least partially overlaps the emission diffraction structure (30).

5. The distance measuring system (10) according to any one of the preceding claims, wherein the emission diffraction structure (30) comprises a concentrating grating structure and/or a dispersing grating structure, which are each formed to deflect different light beams of the light, which is incident on the emission diffraction structure (30), to different extent depending on the location of incidence.

6. The distance measuring system (10) according to claim 5, wherein the emission diffraction structure (30) is divided into preset sub-areas, wherein the preset sub-areas differ in the provided concentrating grating structure or dispersing grating structure, to deflect the light beams of the light for coupling out of the carrier medium (12) to different extent in certain areas depending on the location of incidence, to determine an emission characteristic.

7. The distance measuring system (10) according to any one of the preceding claims, wherein the detector device (22) comprises a photodiode array (38), wherein the photodiode array (28) is configured to associate the light coupled out onto the detector device (22) corresponding to an entry position on the measuring area (28) and/or an angle of entry on the measuring area.

## Revendications

1. Système de mesure de distance (10) comportant :
- un support (12) configuré pour transmettre, par réflexion interne, de la lumière couplée sous forme de conduit de lumière, et comportant une zone de mesure (28) destinée à émettre et recevoir de la lumière, une zone de couplage (24) et une zone de détection (34) qui sont agencées dans différentes parties du support ;
- une source de lumière (18) configurée et agencée de manière à émettre de la lumière à une longueur d'onde prédéfinie vers la zone de couplage (24) ;
- la zone de couplage (24) étant réalisée sous la forme d'un élément holographique ayant une structure de diffraction et de couplage (26) et étant conçue pour coupler de la lumière à la longueur d'onde prédéfinie, qui est incidente sur la structure de diffraction et de couplage (26) et émise par la source de lumière (18), dans le support (12) en direction de la zone de mesure (28) ;
- la zone de mesure (28) étant réalisée sous la forme d'une combinaison d'un élément holographique (17) ayant une structure de diffraction en émission (30) et d'un élément holographique (16) ayant une structure de diffraction en réception (32), la structure de diffraction en émission (30) étant conçue pour découpler de la lumière couplée à la longueur d'onde prédéfinie de la zone de couplage (24) provenant du support dans un volume de mesure à surveiller en vue d'une réflexion sur un objet situé à l'extérieur du support, et la structure de diffraction en réception (32) étant conçue pour coupler la lumière réfléchie à la longueur d'onde prédéfinie, qui est incidente sur la structure de diffraction en réception (32) et émise depuis l'extérieur du support, en direction de la zone de détection (34) dans le support (12) ;
- la zone de détection (34) étant réalisée sous la forme d'un élément holographique ayant une structure de diffraction et de détection (36) et étant conçue pour découpler du support (12) de la lumière couplée à la longueur d'onde prédéfinie de la zone de mesure (28), qui est incidente sur la structure de diffraction et de détection (36), vers un dispositif de détection (22) ;
- le dispositif de détection (22) étant configuré pour capturer la lumière à la longueur d'onde prédéfinie découplée vers le dispositif de détection et pour déterminer une distance par rapport à l'objet à partir d'un temps de propagation de lumière de la lumière provenant de la source de lumière (18) jusqu'au dispositif de détection (22) ;
- la zone de couplage (24) et la zone de détection (34) ayant une dimension inférieure à la zone de mesure (28),
**caractérisé en ce que** la structure de diffraction et de couplage (26) comporte une structure de réseau de diffusion configurée pour dévier avec une intensité différente des faisceaux lumineux de la lumière incidente sur la structure de diffraction et de couplage (26) en fonction d'un site d'incidence, de sorte que la structure de diffraction et de couplage (26) étale les faisceaux lumineux en éventail sur la structure de diffraction en émission (30), et
la structure de diffraction en réception (32) comporte une structure de réseau de focalisation configurée pour dévier avec une intensité différente la lumière réfléchie, qui est incidente sur la structure de diffraction en réception (32) et émise depuis l'extérieur du support, en fonction du site d'incidence, de sorte que la structure de diffraction en réception (32) focalise les faisceaux lumineux sur la structure de diffraction et de détection (36), et la structure de diffraction et de détection (36) comportant une structure de diffraction et de diffusion correspondante configurée pour disposer en parallèle sur le dispositif de détection (22) les faisceaux lumineux de la lumière afin de les découpler du support (12).

2. Système de mesure de distance (10) selon la revendication 1, dans lequel la structure de diffraction et de couplage (26), la structure de diffraction en émission (32), la structure de diffraction en réception (32) et la structure de diffraction et de détection (36) sont réalisées sous la forme d'un réseau optique, en particulier d'un réseau holographique volumique ou d'un réseau holographique surfacique.

3. Système de mesure de distance (10) selon l'une des revendications précédentes, dans lequel la zone de couplage (24), la zone de mesure (28) et la zone de détection (34) sont réalisées d'un seul tenant avec le support (12) ou le support (12) est réalisé sous forme d'élément séparé de la zone de couplage (24), de la zone de mesure (28) et de la zone de détection (34).

4. Système de mesure de distance (10) selon l'une des revendications précédentes, dans lequel l'élément holographique (17) de la structure de diffraction en émission et l'élément holographique (16) de la structure de diffraction en réception sont reliés l'un à l'autre, la structure de diffraction en réception (32) étant agencée entre ceuxci du point de vue du volume de mesure, et la structure de diffraction en réception (32) et la structure de diffraction en émission (30) étant au moins partiellement superposées.

5. Système de mesure de distance (10) selon l'une des revendications précédentes, dans lequel la structure de diffraction en émission (30) comporte une structure de réseau de focalisation et/ou une structure de réseau de diffusion qui sont respectivement configurées pour dévier, avec une intensité différente, différents faisceaux lumineux de la lumière qui est incidente sur la structure de diffraction en émission (30), en fonction du site d'incidence.

6. Système de mesure de distance (10) selon la revendication 5, dans lequel la structure de diffraction en émission (30) est divisée en sous-zones prédéfinies, les sous-zones prédéfinies différant par la structure de réseau de focalisation ou la structure de réseau de diffusion fournie, afin de dévier avec une intensité différente les faisceaux lumineux de la lumière à découpler du support (12) dans certaines zones en fonction du site d'incidence, afin de déterminer une caractéristique d'émission.

7. Système de mesure de distance (10) selon l'une des revendications précédentes, dans lequel le dispositif de détection (22) comporte une matrice à photodiodes (38), la matrice à photodiodes (28) étant conçue pour affecter la lumière découplée vers le dispositif détecteur (22) en fonction d'une position d'entrée dans la zone de mesure (28) et/ou d'un angle d'entrée dans la zone de mesure.
